# EUROPÄISCHE PATENTSCHRIFT

(11) **EP 1 537 158 B1**
(45) Veröffentlichungstag und Bekanntmachung des Hinweises auf die Patenterteilung: **24.04.2013**
(21) Anmeldenummer: 03793761.2
(22) Anmeldetag: 28.08.2003
(51) Int. Cl.: C08G 18/28, C08G 18/32, C08G 18/67, C09D 175/16, C08J 3/24

(54) **STRAHLUNGSHAERTBARE POLYURETHANE MIT VERKAPPTEN AMINOGRUPPEN**
RADIATION CURED POLYURETHANES WITH CAPPED AMINO GROUPS
POLYURETHANNES DURCISSABLES PAR RAYONNEMENT CONTENANT DES GROUPES AMINO PROTEGES

(30) Priorität: 04.09.2002 DE 10241299
(43) Veröffentlichungstag der Anmeldung: 08.06.2005
(73) Patentinhaber: BASF SE, 67056 Ludwigshafen (DE)
(72) Erfinder: WAGNER, Eva, 67346 Speyer (DE); KÖNIGER, Rainer, Clifton Park, NY 12065 (US); BRUCHMANN, Bernd, 67251 Freinsheim (DE); RENZ, Hans, 67149 Meckenheim (DE)
(86) Internationale Anmeldenummer: PCT/EP2003/009512
(87) Internationale Veröffentlichungsnummer: WO 2004/022621

(56) Entgegenhaltungen:
- EP-A- 0 659 791
- EP-A- 0 752 433
- DE-A- 3 324 960
- DE-A- 10 047 989

## Beschreibung

Die Erfindung betrifft strahlungshärtbare Verbindungen mit verkappten Aminogruppen und gegebenenfalls Isocyanatgruppen oder verkappte Isocyanatgruppen und deren Verwendung in Dual- und Multi-Cure Systemen.

Als Verkappungsmittel für NCO-Gruppen eignen sich z.B. Oxime, Phenole, Imidazole, Pyrazole, Pyrazolinone, Diketopiperazine, Caprolactam, Malonsäureester oder Verbindungen, wie sie genannt sind in den Veröffentlichungen von Z.W. Wicks, Prog. Org. Coat. 3 (1975) 73 - 99 und Prog. Org. Coat 9 (1981), 3 - 28 sowie in Houben-Weyl, Methoden der Organischen Chemie, Bd. XIV/2, 61 ff. Georg Thieme Verlag, Stuttgart 1963.

Dual Cure Systeme zeichnen sich dadurch aus, daß sie durch zwei unabhängige Härtungsmechanismen aushärtbar sind, z.B. durch Strahlungs-, Feuchtigkeits-, oxidative oder thermische Härtung. Besonders gewünscht werden solche Systeme, die sich nach dem Auftrag des Beschichtungsmittels durch möglichst kurze Bestrahlung zu einem staubtrockenen, flexiblen Film vorhärten lassen. Dieser Film soll dann entweder thermisch nachhärtbar sein oder im Verlauf einiger Tage durch einfache Lagerung an der Luft weiter aushärten, bis ein harter Film entstanden ist, der die endgültigen gewünschten Gebrauchseigenschaften aufweist. Diese Art der zweistufigen Härtung ist deshalb von besonderer Bedeutung, weil es den Verarbeitern der Beschichtungsmittelsysteme die Möglichkeit gibt, in einem ersten Arbeitsschritt einen Gegenstand mit einem Film zu beschichten und diesen Film in einem weiteren Arbeitsschritt weiterzuverarbeiten, insbesondere dem bereits beschichteten Gegenstand nach der Bestrahlung unter Anwendung von Druck ein bestimmtes Profil zu verleihen. Die Filme müssen also bei ihrer Verformung im zweiten Arbeitsschritt bereits vorgehärtet sein, so daß sie bei der Verformung nicht an den Werkzeugen kleben bleiben, andererseits dürfen sie jedoch noch nicht so hart sein, daß sie bei der Dehnung und Verformung reißen.

Mit dem Begriff "Dual Cure" beziehungsweise "Multi Cure" ist erfindungsgemäß ein Härtungsprozeß bezeichnet, der über zwei beziehungsweise mehr als zwei Mechanismen erfolgt, und zwar strahlungs-, feuchtigkeits-, chemisch, oxidativ oder thermisch härtend.

WO 00/39183 beschreibt Urethan- und Allophanatgruppen enthaltende, radikalisch polymerisierbare, aktivierte C=C-Doppelbindungen enthaltende Verbindungen.

Derlei Verbindungen verfügen lediglich über einen Härtungsmechanismus per Strahlung.

DE-A1 196 09 617 und WO 97/23536 beschreiben Verbindungen mit Isocyanatgruppen und verkappten, gegenüber Isocyanat reaktiven Gruppen, wie beispielsweise Oxazolidinen, für Einkomponenten- und Zweikomponenten-Polyurethanbeschichtungsmassen.

Derlei Verbindungen sind lediglich feuchtigkeitshärtbar, was lange Härtungszeiten erfordert und zu weichen Filmen führt.

WO 01/83579 beschreibt mehrkomponentige Beschichtungssysteme, die ein Addukt aus einem beispielsweise oxazolidinhaltigen Diisocyanat und einem hydroxygruppenhaltigen (Meth)acrylatcopolymerisat enthält.

Die beschriebenen Addukte sind jedoch wegen Abwesenheit von Doppelbindungen im auspolymerisierten (Meth)acrylatcopolymerisat nicht strahlungshärtbar und erfordern somit Härtungszeiten von im allgemeinen mindestens 30 min. Eine Strahlungshärtung ist lediglich dann möglich, wenn strahlungshärtbare Komponenten unabhängig vom Addukt beigemischt sind.

DE-A1 100 47 989 beschreibt Dual Cure Mehrkomponentenbeschichtungsstoffe, die ein Addukt aus einem beispielsweise isocyanatgruppenhaltigen Urethan aus Hexamethylendiisocyanat und einem Oxazolidin und einem hydroxygruppenhaltigen und strahlungshärtbaren (Meth)acrylatcopolymerisat enthält. Das eingesetzte Copolymerisat weist vorteilhafterweise Molekulargewichte Mₙ von 1.000 bis 20.000 und M_{w} von 2.000 bis 100.000 Dalton auf.

Nachteilig an diesen Systemen ist, daß durch die hohen Molekulargewichte des eingesetzten Copolymerisats die entstehenden Addukte ebenfalls hohe Molekulargewichte und somit hohe Viskositäten aufweisen.

Aufgabe der vorliegenden Erfindung war es, strahlungshärtbare Dual- oder Multi Cure Systeme zur Verfügung zu stellen, die eine niedrige Viskosität aufweisen und gute Oberflächeneigenschaften zeigen.

Die Aufgabe wurde gelöst durch Polyurethane (A), enthaltend als Aufbaukomponenten
a) mindestens ein organisches Di- oder Polyisocyanat,
b) mindestens eine Verbindung mit mindestens einer gegenüber Isocyanat reaktiven Gruppe und mindestens einer Acrylat- oder Methacrylatgruppe,
c) mindestens eine Verbindung mit mindestens einer gegenüber Isocyanat reaktiven Gruppe und mindestens einer verkappten Aminogruppe ausgewählt aus der Gruppe bestehend aus offenkettigen oder cyclischen Aminalen, N,O-Acetalen, N,O-Ketalen, Ketiminen, Aldiminen, Carbonsäureamiden, Sulfonsäureamiden oder Amidinen und einem Molekulargewicht unter 1000 g/mol, der Formel (I) , 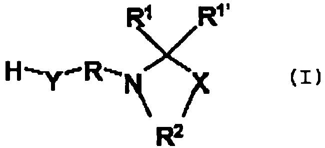 worin
   - R, R²: unabhängig voneinander einen divalenten organischen, 2 bis 20 Kohlenstoffatome umfassenden, aliphatischen, cycloaliphatischen oder aromatischen, gegebenenfalls durch funktionelle Gruppen, Aryl, Alkyl, Aryloxy, Alkyloxy, Halogen, Heteroatome und/oder Heterocyclen substituierten organischen Rest,
   - R¹, R^{1'}: unabhängig voneinander Wasserstoff, C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₀-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus, wobei die genannten Reste jeweils durch funktionelle Gruppen, Aryl, Alkyl, Aryloxy, Alkyloxy, Halogen, Heteroatome und/oder Heterocyclen substituiert sein können,
   - X: Sauerstoff (-O-), un- oder monosubstituierter Stickstoff (>NR⁴) oder >N-NR⁴R⁵,
   - Y: Sauerstoff (-O-), unsubstituierter Stickstoff (>NH) oder Schwefel (-S-) und
   - R⁴, R⁵: unabhängig voneinander Wasserstoff oder C₁-C₄-Alkyl
   bedeuten
d) gegebenenfalls mindestens eine Verbindung mit mindestens einer gegenüber Isocyanat reaktiven Gruppe und mindestens einer dispergieraktiven Gruppe
e) gegebenenfalls mindestens eine Verbindung mit mindestens zwei gegenüber Isocyanat reaktiven Gruppen sowie
f) gegebenenfalls von a) bis d) verschiedene Verbindungen mit mindestens einer gegenüber Isocyanat reaktiven Gruppe, wobei der Allophanatanteil 5 bis 65 mol% bezogen auf das niedermolekularste Allophanatmolekül beträgt.

Das zahlenmittlere molekulargewicht Mₙ dieser Verbindungen (A), bestimmt durch Gelpermeationschromatographie mit Tetrahydrofuran als Elutionsmittel und Polystyrol als Standard, kann beispielsweise zwischen 200 und 50000, bevorzugt zwischen 250 und 30000, besonders bevorzugt zwischen 350 und 10000 und insbesondere zwischen 350 und 5000 betragen.

Der Gehalt an Acrylat- und Methacrylatgruppen kann beispielsweise mindestens 0,01 mol/100 g Verbindung, bevorzugt mindestens 0,05, besonders bevorzugt mindestens 0,1 und insbesondere mindestens 0,2 mol/100 g betragen.

Der Gehalt an verkappten Aminogruppen kann beispielsweise mindestens 0,01 mol/100 g Verbindung, bevorzugt mindestens 0,05, besonders bevorzugt mindestens 0,1 und insbesondere mindestens 0,2 mol/100 g betragen.

Die erfindungsgemäßen Polyurethane (A) enthalten als Aufbaukomponenten im wesentlichen die oben angeführten Komponenten a), b) und c) sowie gegebenenfalls die Komponenten d), e) und/oder f).

Die Verbindungen (C) (photochemisch und/oder thermisch aktivierbare(n) Initiator(en)) und (D) (weitere lacktypische Additive) können auch den Polyurethanen zugesetzt werden, wenn man Lackformulierungen zur Herstellung von Dual Cure Lacken bereiten will.

Als Komponente a) kommen beispielsweise aliphatische, aromatische und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Urethane, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4_{'}-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Es können auch Gemische der genannten Diisocyanate vorliegen.

Als übliche Isocyanate mit im Mittel wenigstens 2 Isocyanatgruppen eignen sich beispielsweise Triisocyanate wie 2,4,6-Triisocyanatotoluol, Triphenylmethantriisocyanat oder 2,4,4'-Triisocyanatodiphenylether oder die Gemische aus Di-, Tri- und höheren Polyisocyanaten, die durch Phosgenierung von entsprechenden Anilin/Formaldehyd-Kondensaten erhalten werden und Methylenbrücken aufweisende Polyphenylpolyisocyanate darstellen.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, UrEtonimin-modifizierte Polyisocyanate von geradlinigen oder verzweigten C₁-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische Di- und Polyisocyanate. z.B. die vorstehend genannten aliphatischen bzw. cycloaliphatischen Diisocyanate, oder deren Mischungen.

Besonders bevorzugt sind Hexamethylendiisocyanat, 1,3-Bis(isocyanatomethyl)cyclohexan, Isophorondiisocyanat und Di(isocyanatocyclohexyl)methan, ganz besonders bevorzugt sind Isophorondiisocyanat und Hexamethylendiisocyanat, insbesondere bevorzugt ist Hexamethylendiisocyanat.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclischen Dimerisierungsprodukte von Diisocyanaten.
   Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, *iso-*Propanol, n-Propanol, n-Butanol, *iso*-Butanol, *sek*-Butanol, *tert-*Butanol, n-Hexanol, n-Heptanol, n-Octanol, n-Decanol, n-dodecanol (Laurylalkohol). 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butandiol, 1,6-Hexandiol, 1,3-Propandiol, 2-Ethyl-1,3-Propandiol, 2-Methyl-1,3-Propandiol, Ethylenglykol, Diethylenglykol, Triethylenglykol, Tetraethylenglykol, pentaethylenglykol, Glycerin, 1,2-Dihydroxypropan, 2,2-Dimethyl-1,2-ethandiol, 1,2-Butandiol, 1,4-Butandiol, 3-Methylpentan-1,5-diol, 2-Ethylhexan-1,3-diol, 2,4-Diethyloctan-1,3-diol, Hydroxypivalinsäureneopentylglykolester, Ditrimethylolpropan, Dipentaerythrit, 2,2-Bis(4-hydroxycyclohexyl)propan, 1,1-, 1,2-, 1,3- und 1,4-Cyclohexandimethanol, 1,2-, 1,3- oder 1,4-Cyclohexandiol oder deren Gemischen erhalten werden können. Diese Urethan- und/oder Allophanatgruppen aufweisenden Polyisocyanate haben im allgemeinen einen NCO-Gehalt von 12 bis 20 Gew..-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.

Die Polyisocyanate 1) bis 7) können im Gemisch, gegebenenfalls auch im Gemisch mit Diisocyanaten, eingesetzt werden.

Als Komponente b) kommen Verbindungen in Betracht, die mindestens eine gegenüber Isocyanat reaktive Gruppe und mindestens eine Acrylat- oder Methacrylatgruppe tragen.

Gegenüber Isocyanat reaktive Gruppen können z.B. sein -OH, -SH, -NH₂ und -NHR⁴, wobei R⁴ Wasserstoff oder C₁-C₄-Alkyl bedeuten kann.

C₁-C4-Alkyl bedeutet im Rahmen dieser Schrift Methyl, Ethyl, *iso-*Propyl, n-Propyl, n-Butyl, *iso*-Butyl, *sek*-Butyl oder *tert*-Butyl.

Komponenten b) sind beispielsweise Monoester von Acrylsäure oder Methacrylsäure (in dieser Schrift kurz als "(Meth)acrylsäure" bezeichnet) mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,2-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 378, Poly-1,3-propandiol oder Polypropylenglykol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen z. B. 2-Aminoethanol, 2-(Methylamino)ethanol. 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin verwendet werden.

Weiterhin sind auch ungesättigte Polyether- oder Polyesterole oder Polyacrylatpolyole mit einer mittleren OH-Funktionalität von 2 bis 10 geeignet.

Bevorzugt verwendet werden 2-Hydroxyethyl(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat, Pentaerythritmono-, -di- und - tri(meth)acrylat sowie 2-Aminoethyl(meth)acrylat, 2-Aminopropyl(meth)acrylat. 3-Aminopropyl(meth)acrylat, 4-Aminobutyl(meth)acrylat, 6-Aminohexyl(meth)acrylat, 2-Thioethyl(meth)acrylat,. Besonders bevorzugt sind 2-Hydroxyethylacrylat, 2-Hydroxyethylmethacrylat, 2- oder 3-Hydroxypropylacrylat, 1,4-Butandiolmonoacrylat und 3-(Acryloyloxy)-2-hydroxypropylmethacrylat.

Als Komponente c) kommen Verbindungen in Frage, die mindestens eine gegenüber Isocyanat reaktive Gruppe und mindestens eine verkappte Aminogruppe aufweisen, die ein Molekulargewicht unter 1000 g/mol, bevorzugt unter 750 g/mol, besonders bevorzugt unter 500 g/mol und insbesondere unter 250 g/mol aufweisen.

Verkappte Aminogruppen sind solche, aus denen un- oder monosubstituierte Aminogruppen freigesetzt werden können und umfassen offenkettige oder cyclische Aminale, N,O-Acetale, N,O-Ketale, Ketimine, Aldimine, Carbonsäureamide, Sulfonsäureamide oder Amidine, bevorzugt Ketimine, Aldimine, Aminale, N,O-Acetale, N,O-Ketale oder Amidine, besonders bevorzugt Aminale, Ketimine, Aldimine, N,O-Acetale oder N,O-Ketale, und ganz besonders bevorzugt N,O-Acetale.

Der Begriff "verkappt" bedeutet in dieser Schrift, daß die betreffende Struktur, beispielsweise eine Aminogruppe, unter den Reaktionsbedingungen der Herstellung der erfindungsgemäßen Polyurethane und der strahlungshärtbaren Masse im wesentlichen stabil ist und erst unter den Bedingungen der Härtung zersetzt und somit die betreffende Struktur signifikant freigesetzt wird. "Im wesentlichen stabil" bedeutet dabei, daß unter den Reaktionsbedingungen weniger als 10 Mol% pro Stunde, bevorzugt weniger als 5 Mol %/h, besonders bevorzugt weniger als 2 Mol %/h und ganz besonders bevorzugt weniger als 1 Mol %/h zersetzt werden.

Bevorzugte verkappte Aminogruppen aufweisende Verbindungen sind Oxazolidine, Aldimine und Ketimine, wie sie beispielsweise aus EP-A1 659 791, s. 6, Z. 26 bis s. 7, Z. 13 und den Beispielen sowie aus US 5,922,804, Sp. 1, Z. 42 bis Sp. 3, Z.45 bekannt sind, besonders bevorzugt Oxazolidine.

Die Verbindungen c) können eine oder mehrere verkappte Aminogruppe enthalten, beispielsweise 1 bis 3, bevorzugt 1 bis 2 und besonders bevorzugt 1.

Die Verbindungen c) können eine oder mehrere gegenüber Isocyanat reaktive Gruppen enthalten, beispielsweise 1 bis 3, bevorzugt 1 bis 2 und besonders bevorzugt 1.

Verbindungen c) können beispielsweise solche mindestens ein Stickstoffatom im Ring enthaltenden Verbindungen sein, die in der DE-A1 196 09 617 auf S. 2, Z. 31 - 59 und besonders auf S. 3, Z. 33 - 55 aufgeführt sind, oder Oxazolidine, wie sie in DE-OS 22 45 636 auf S. 2, Z. 5 bis S. 3, 3. Absatz und in den Beispielen 1, 2, 5, 6 und 9 beschrieben sind. Auf beide Schriften wird im Rahmen der vorliegenden Offenbarung hiermit ausdrücklich Bezug genommen.

Die Herstellung von β-Hydroxyalkyl-Oxazolidinen ist in DE-OS 22 45 636 auf S. 3, 3. Absatz bis S. 4, 1. Absatz beschrieben.

Komponenten c) sind Verbindungen der Formel (I), 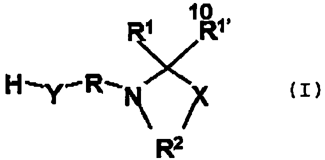 worin
- R, R²: unabhängig voneinander einen divalenten organischen, 2 bis 20 Kohlenstoffatome umfassenden, aliphatischen, cycloaliphatischen oder aromatischen, gegebenenfalls durch funktionelle Gruppen, Aryl, Alkyl, Aryloxy, Alkyloxy, Halogen, Heteroatome und/oder Heterocyclen substituierten organischen Rest,
- R¹, R^{1'}: unabhängig voneinander Wasserstoff, C₁ - C₁₀-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₀-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus, wobei die genannten Reste jeweils durch funktionelle Gruppen, Aryl, Alkyl, Aryloxy, Alkyloxy, Halogen, Heteroatome und/oder Heterocyclen substituiert sein können,
- X: Sauerstoff (-O-), un- oder monosubstituierter Stickstoff (>NR¹) oder >N-NR⁴R⁵,
- Y: Sauerstoff (-O-), unsubstituierter Stickstoff (>NH) oder Schwefel (-S-) und
- R⁴, R⁵: unabhängig voneinander Wasserstoff oder C₁-C₄-Alkyl
bedeuten.

Beispiele für R und R² sind 1,2-methylen, 1,2-Propylen, 2-Methyl,-1,2-propylen, 1-Phenyl-1,2-Ethylen, 2'-Aminoethyl-1,2-Ethylen, 1-*iso-*Propyl-1,2-Ethylen, 1-*tert*-Butyl-1,2-Ethylen, 1-Benzyl-1,2-Ethylen, 1-Phenyl-2-methyl-1,2-Ethylen. 1-Phenyl-2-methoxymethyl-1,2-Ethylen, But-1-en-3,4-ylen, 1,3-Propylen, 2-Methyl-1,3-propylen, 2-Ethyl-1,3-propylen. 1,4-Butylen, 1,6-Hexylen, 2,2-Dimethyl-1,3-Propylen, 2,2-Dimethyl-1,4-butylen, 1,1-, 1,2-, 1,3- oder 1,4-Cyclohexylen, 1,2- oder 1,3-Cyclopentylen, 1,2-, 1,3- oder 1,4-Phenylen, 4,4'-Biphenylen oder 3-Oxa-1,5-Pentylen.

Bevorzugt sind R und R² unabhängig voneinander 1,2-Ethylen, 1,2-Propylen, 2-Methyl-1,2-propylen oder 1,3-propylen, besonders bevorzugt 1,2-Ethylen oder 1,2-Propylen und ganz besonders bevorzugt 1,2-Ethylen.

R¹ und R^{1'} können unabhängig voneinander beispielsweise sein Wasserstoff, Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, 2-Methoxyethyl, 2-Ethoxyethyl, 2-Butoxyethyl, Chlormethyl, 2-Chlorethyl, Trichlormethyl, Trifluormethyl, Vinyl, 1-Propenyl, Benzyl, Phenyl, Tolyl, Chlorphenyl, Dichlorphenyl, 2,6-Dimethylphenyl, 2,4.6-Trimethylphenyl, 2,6-Dimethoxyphenyl, 2,6-Dichlorphenyl, Cyclopentyl, Cyclohexyl oder Furyl.

Bevorzugt sind R¹ und R^{1'} unabhängig voneinander Wasserstoff, Methyl, Ethyl, Propyl, Isopropyl, n-Butyl, sec-Butyl, tert.-Butyl, Phenyl, Cyclopentyl, Cyclohexyl oder Furyl, besonders bevorzugt sind R¹ Wasserstoff, Methyl, Ethyl, Propyl, oder Isopropyl, und R^{1'} Wasserstoff, Methyl oder Ethyl, ganz besonders bevorzugt sind R¹ Wasserstoff, Methyl und *iso*-Propyl und insbesondere *iso*-Propyl und R^{1'} Wasserstoff oder R¹ und R^{1'} beide Methyl.

X ist bevorzugt Sauerstoff (-O-) oder un- oder monosubstituierter Stickstoff (>NR⁴) und besonders bevorzugt Sauerstoff.

Y ist bevorzugt Sauerstoff (-O-) oder unsubstituierter Stickstoff (>NH) und besonders bevorzugt Sauerstoff.

Besonders bevorzugte Komponenten c) sind N-(2'-Hydroxyethyl)-Oxazolidin, N-(2'-Hydroxyethyl)-2-methyloxazolidin, N-(2'-Hydroxyethyl)-2-ethyloxazolidin, N-(2'-Hydroxyethyl)-2-iso-Propyloxazolidin, N-(2'-Hydroxyethyl)-2-propyloxazolidin, N-(2'-Hydroxyethyl)-2-phenyloxazolidin, N-(2'-Hydroxyethyl)-2,2-dimethyloxazolidin, N-(2'-Hydroxyethyl)-2,2-diethyloxazolidin, N-(2'-Hydroxyethyl)-4-methyloxazolidin, N-(2'-Hydroxyethyl)-2,4-dimethyloxazolidin, N-(2'-Hydroxyethyl)-2-ethyl-4-methyloxazolidin, N-(2'-Hydroxyethyl)-2-iso-propyl-4-methyloxazolidin, N-(2'-Hydroxyethyl)-2-propyl-4-methyloxazolidin, N-(2'-Hydroxyethyl)-2-phenyl-4-methyloxazolidin, N-(2'-Hydroxyethyl)-2,2,4-trimethyloxazolidin, N-(2'-Hydroxyethyl)-5-methyloxazolidin. N-(2'-Hydroxyethyl)-2,5-dimethyloxazolidin, N-(2'-Hydroxyethyl)-2-ethyl-5-methyloxazolidin, N-(2'-Hydroxyethyl)-2-iso-propyl-5-methyloxazolidin, N-(2'-Hydroxyethyl)-2-propyl-5-methyloxazolidin. N-(2'-Hydroxyethyl)-2-phenyl-5-methyloxazolidin, N-(2'-Hydroxyethyl)-2,2,5-trimethyloxazolidin, N-(2'-Hydroxyethyl)-4,4-methyloxazolidin, N-(2'-Hydroxyethyl)-2,4,4-trimethyloxazolidin, N-(2'Hydroxyethyl)-2-ethyl-4,4-dimethyloxazolidin, N-(2'-Hydroxyethyl)-2-iso-propyl-4,4-dimethyloxazolidin, N-(2'-Hydroxyethyl)-2-propyl-4,4-dimethyloxazolidin, N-(2'-Hydroxyethyl)-2-phenyl-4,4-dimethyloxazolidin, N-(2'-Hydroxyethyl)-2,2,4,4-tetramethyloxazolidin, N-(2'-Hydroxypropyl)-oxazolidin, N-(2'-Hydroxypropyl)-2-methyloxazolidin, N-(2'-Hydroxypropyl)-2-ethyloxazolidin, N-(2'-Hydroxypropyl)-2-iso-Propyloxazolidin, N-(2'-Hydroxypropyl)-2-propyloxazolidin, N-(2'-Hydroxypropyl)-2-phenyloxazolidin, N-(2'-Hydroxypropyl)-2,2-dimethyloxazolidin, N-(2'-Hydroxypropyl)-4-methyloxazolidin, N-(2'-Hydroxypropyl)-2.4-dimethyloxazolidin, N-(2'-Hydroxypropyl)-2-ethyl-4-methyloxazolidin, N-(2'-Hydroxypropyl)-2-iso-propyl-4-methyloxazolidin, N-(2'-Hydroxypropyl)-2-propyl-4-methyloxazolidin, N-(2'-Hydroxypropyl)-2-phenyl-4-methyloxazolidin, N-(2'-Hydroxypropyl) -2,2,4-trimethyloxazolidin, N-(2'-Hydroxypropyl)-5-methyloxazolidin, N-(2'-Hydroxypropyl)-2,5-dimethyloxazolidin, N-(2'-Hydroxypropyl)-2-ethyl-5-methyloxazolidin, N-(2'-Hydroxypropyl)-2-iso-propyl-5-methyloxazolidin, N-(2'-Hydroxypropyl)-2-propyl-5-methyloxazolidin, N-(2'-Hydroxypropyl)-2-phenyl-5-methyloxazolidin, N-(2'-Hydroxypropyl)-2,2,5-trimethyloxazolidin, N-(2'-Hydroxypropyl)-4,4-methyloxazolidin, N-(2'-Hydroxypropyl)-2,4,4-trimethyloxazolidin, N-(2'-Hydroxypropyl)-2-ethyl-4,4-dimethyloxazolidin, N-(2'-Hydroxypropyl)-2-iso-propyl-4,4-dimethyloxazolidin, N-(2'-Hydroxypropyl) -2-propyl-4,4-dimethyloxazolidin, N-(2'-Hydroxypropyl)-2-phenyl-4,4-dimethyloxazolidin, N-(2'-Hydroxypropyl)-2,2,4,4-tetramethyloxazolidi, N-(3'-Hydroxypropyl)-oxazolidin, N-(3'-Hydroxypropyl)-2-methyloxazolidin, N-(3'-Hydroxypropyl)-2-ethyloxazolidin, N-(3'-Hydroxypropyl)-2-iso-Pxopyloxazolidin, N-(3'-Hydroxypropyl)-2-propyloxazolidin, N-(3'-Hydroxypropyl)-2-phenyloxazolidin, N-(3'-Hydroxypropyl)-2,2-dimethyloxazolidin, N-(3'-Hydroxypropyl)-4-methyloxazolidin, N-(3'-Hydroxypropyl)-2,4-dimethyloxazolidin, N-(3'-Hydroxypropyl)-2-ethyl-4-methyloxazolidin, N-(3'-Hydroxypropyl)-2-iso-propyl-4-methyloxazolidin, N-(3'-Hydroxypropyl)-2-propyl-4-methyloxazolidin, N-(3'-Hydroxypropyl)-2-phenyl-4-methyloxazolidin, N-(3'-Hydroxypropyl)-2,2,4-trimethyloxazolidin, N-(3'-Hydroxypropyl)-5-methyloxazolidin, N-(3'-Hydroxypropyl)-2,5-dimethyloxazolidin, N-(3'-Hydroxypropyl)-2-ethyl-5-methyloxazolidin, N-(3'-Hydroxypropyl)-2-iso-propyl-5-methyloxazolidin, N-(3'-Hydroxypropyl)-2-propyl-5-methyloxazolidin, N-(3'-Hydroxypropyl)-2-phenyl-5-methyloxazolidin, N-(3'-Hydroxypropyl)-2,2,5-trimethyloxazolidin, N-(3'-Hydroxypropyl)-4,4-methyloxazolidin, N-(3'-Hydroxypropyl)-2,4,4-trimethyloxazolidin, N-(3'-Hydroxypropyl) - 2-ethyl-4,4-dimethyloxazolidin, N-(3'-Hydroxypropyl)-2-iso-propyl-4,4-dimethyloxazolidin, N-(3'-Hydroxypropyl)-2-propyl-4,4-dimethyloxazolidin, N-(3'-Hydroxypropyl)-2-phenyl-4,4-dimethyloxazolidin oder N-(3'-Hydroxypropyl)-2,2,4,4-tetramethyloxazolidin.

Ganz besonders bevorzugt sind N-(2'-Hydroxyethyl)-oxazolidin, N-(2'-Hydroxyethyl)-2-methyloxazolidin, N-(2'-Hydroxyethyl)-2-ethyloxazolidin, N-(2'-Hydroxyethyl)-2-iso-Propyloxazolidin,N-(2'-Hydroxyethyl)-2,2-dimethyloxazolidin N-(2'-Hydroxypropyl)-oxazolidin, N-(2'-Hydroxypropyl)-2-methyloxazolidin, N-(2'-Hydroxypropyl)-2-ethyloxazolidin, N-(2'-Hydroxypropyl)-2-iso-Propyloxazolidin, N-(2'-Hydroxypropyl)-2,2-dimethyloxazolidin, insbesondere bevorzugt sind N-(2'-Hydroxyethyl)-oxazolidin, N-(2'-Hydroxyethyl)-2-iso-Propyloxazolidin und N-(2'-Hydroxyethyl)-2,2-dimethyloxazolidin.

Als Komponente d) kommen Verbindungen mit mindestens einer gegenüber Isocyanat reaktiven Gruppe und mindestens einer dispergieraktiven Gruppe in Betracht.

Solche Verbindungen werden beispielsweise durch die allgemeine Formel

RG-R³-DG

dargestellt, worin
RG mindestens eine gegen Isocyanat reaktive Gruppe bedeutet,
DG mindestens eine dispergieraktive Gruppe und
R¹ einen 1 bis 20 Kohlenstoffatome enthaltenden aliphatischen, cycloaliphatischen oder aromatischen Rest.

Beispiele für gegenüber Isocyanat reaktiven Gruppen RG sind -OH, -SH, -NH₂ oder -NHR⁴, worin R⁴ die oben angeführte Bedeutung hat, jedoch von dem dort verwendeten Rest verschieden sein kann.

Beispiele für DG sind -COOH, -SO₃H oder -PO₃H sowie deren anionischen Formen, denen ein beliebiges Gegenion assoziiert sein kann, z.B. Li', Na⁺, K', Cs⁺, Mg²⁺, Ca^{2'}, Ba²⁺, Ammonium, Methylammonium, Dimethylammonium, Trimethylammonium, Ethylammonium, Diethylammonium, Triethylammonium, Tributylammonium, Di-*iso*-propyl-ethyl-ammonium, Benzyldimethylammonium, Manoethanolammonium, Diethanolammonium, Triethanolammonium, Hydroxyethyl-Dimethylammonium, Hydroxyethyl-Diethylammonium, Monopropanolammonium, Dipropanolammonium, Tripropanolammonium, Piperidinium, Piperazinium, N,N'-Dimethylpiperazinium, Morpholinium oder Pyridinium.

R³ kann z.B. Methylen, 1,2-Ethylen, 1,2-Propylen, 1,3-propylen, 1,2-Butylen, 1,4-Butylen, 1,3-Butylen, 1,6-Hexylen, 1,8-Octylen, 1,12-Dodecylen, 1,2-Phenylen, 1,3-Phenylen, 1,4-Phenylen, 1,2-Naphthylen, 1,3-Naphthylen, 1,4-Naphthylen, 1,6-Naphthylen, 1,2-Cyclopentylen, 1,3-Cyclopentylen, 1,2-Cyclohexylen, 1,3-Cyclohexylen oder 1,4-Cyclohexylen sein.

Bevorzugt handelt es sich bei der Komponente d) z.B. um Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxyessigsäure, Hydroxypivalinsäure, Milchsäure, Hydroxybernsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure sowie deren Alkali-Erdalkali- oder Ammoniumsalze und besonders bevorzugt um die genannten Monohydroxycarbon- und -sulfosäuren sowie Monoaminocarbon- und - sulfonsäuren.

Zur Herstellung der Dispersion werden die vorgenannten Säuren, falls es sich nicht schon um Salze handelt, teilweise oder vollständig neutralisiert, bevorzugt mit Alkalisalzen oder Aminen, bevorzugt tertiären Aminen.

Als Komponente e) kommen Verbindungen in Betracht, die mindestens zwei gegenüber Isocyanat reaktive Gruppen, beispielsweise -OH, -SH, -NH₂ oder -NHR⁵, worin R⁵ die gleiche Bedeutung aufweist, wie oben angeführt, aufweisen.

Bevorzugte als Komponenten e) verwendbare Verbindungen weisen 2-10 gegenüber Isocyanat reaktive Gruppen auf, besonders bevorzugt 2 - 6, ganz besonders bevorzugt 2 - 4 und insbesondere 2 - 3 gegenüber Isocyanat reaktive Gruppen, bevorzugt -OH oder -NH, und besonders bevorzugt -OH-Gruppen.

Dabei handelt es sich z.B. um Polymere mit einem Gehalt an Hydroxygruppen von 0,1 bis 20, vorzugsweise 0,5 bis 10 Gew.%. Das zahlenmittlere Molekulargewicht Mₙ der Polymeren beträgt vorzugsweise 1000 bis 100 000, besonders bevorzugt 2000 bis 10 000. Bei den Polymeren handelt es sich bevorzugt um solche, welche zu mehr als 50 Gew.% aus C₁-C₂₀-Alkyl(meth)acrylat, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew.% aus C₁-C₁₀-Alkyl(meth)acrylaten, Styrol oder deren Mischungen bestehen.

Darüber können die Polymeren hydroxyfunktionelle Monomere entsprechend dem obigen Hydroxygruppengehalt und gegebenenfalls weitere Monomere enthalten, z.B. ethylenisch ungesättigte Säuren, insbesondere Carbonsäuren, Säureanhydride oder Säureamide.

Weitere Polymere sind z.B. Polyesterole, wie sie durch Kondensation von Polycarbonsäuren, insbesondere Dicarbonsäuren mit Polyolen, insbesondere Diolen erhältlich sind.

Weiterhin sind als Polymere auch Polyetherole geeignet, die durch Addition von Ethylenoxid, Propylenoxid oder Butylenoxid an H-aktive Komponenten hergestellt werden. Ebenso sind Polykondensate aus Butandiol geeignet.

Bei den Polymeren kann es sich natürlich auch um Verbindungen mit primären der sekundären Aminogruppen handeln.

Besonders bevorzugt sind als Komponenten e) Diole oder Polyole, wie 2 bis 20 Kohlenstoffatome aufweisende Kohlenwasserstoffdiole, z.B. Ethylenglycol, 1,2-Propandiol, 1,3-Propandiol, 1,1-Dimethylethan-1,2-diol, 1,6-Hexandiol, 1,10-Dekandiol, Bis-(4-hydroxycyclohexan) isopropyliden, Tetramethylcyclobutandiol, 1,2-, 1,3- oder 1,4-Cyclohexandiol, Cyclooctandiol, Norbornandiol, Pinandiol, Decalindiol, etc. deren Ester mit kurzkettigen Dicarbonsäuren, wie Adipinsäure, Cyclohexandicarbonsäure, deren Carbonate, hergestellt durch Reaktion der Diole mit Phosgen oder durch Umesterung mit Dialkyl- oder Diarylcarbonaten, oder aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclohexan-bis-(methylamin), etc., Dithiole oder mehrfunktionelle Alkohole, sekundäre oder primäre Aminoalkohole, wie Ethanolamin, Diethanolamin, Monopropanolamin, Dipropanolamin etc. oder Thioalkohole, wie Thioethylenglykol.

Weiterhin sind denkbar Diethylenglykol, Triethylenglykol, Dipropylenglykol, Tripropylenglykol, Neopentylglykol, Pentaerythrit, 1,2- und 1,4-Butandiol, 1,5-Pentandiol, 2-Methyl-1,5-pentandiol, 2-Ethyl-1,4-butandiol, 1,2-, 1,3- und 1,4-Dimethylolcyclohexan, Glycerin, Trimethylolethan, Trimethylolpropan, Trimethylolbutan, Dipentaerythrit, Ditrimethylolpropan, Erythrit und Sorbit, 2-Aminoethanol, 3-Amino-1-propanol, 1-Amino-2-propanol oder 2-(2-Aminoethoxy)ethanol, Bisphenol A, oder Butantriol.

Weiterhin sind auch ungesättigte Polyether- oder Polyesterole oder Polyacrylatpolyole mit einer mittleren OH-Funktionalität von 2 bis 10 geeignet, sowie Polyamine, wie z.B. Polyethylenimin oder freie Aminogruppen enthaltende Polymere von z.B. Poly-N-vinylformamid.

Besonders geeignet sind hier die cycloaliphatischen Diole, wie z.B. Bis-(4-hydroxycyclohexan) isopropyliden, Tetramethylcyclobutandiol, 1,2-, 1,3- oder 1,4-Cyclohexandiol, Cyclooctandiol oder Norbornandiol.

Als Komponente f) kommen Verbindungen mit mindestens einer gegenüber Isocyanat reaktiven Gruppe in Betracht. Dies können beispielsweise 1 bis 20 Kohlenstoffatome aufweisende Monoalkohole, Mercaptane oder Monoamine sein, z.B. Methanol, Ethanol, *iso*-Propanol, n-Propanol, n-Butanol, *iso-*Butanol, *sek*-Butanol, *tert*-Butanol, Ethylenglykolmonomethylether, Ethylenglykolmonoethylether, Diethylenglykolmonomethylether, Diethylenglykolmonoethylether, 1,3-Propandiolmonomethylether, 1,2-Propandiolmonoethylether, 1,2-Propandiolmonomethylether, n-Hexanol, n-Heptanol, n-Octanol, n-Decanol, n-Dodecanol, 2-Ethylhexanol, Cyclopentanol, Cyclohexanol, Cyclooctanol, Cyclododecanol, Triethylenglykolmonomethylether, Triethylenglykolmonoethylether, n-Pentanol, Stearylalkohol, Cetylalkohol, Laurylalkohol, Cyclopent-2-en-1-ol, Cyclopent-3-en-1-ol, Cyclohex-2-en-1-ol Allylalkohol, Methylamin, Ethylamin, *iso*-Propylamin, n-Propylamin, n-Butylamin, *iso*-Butylamin, *sek*-Butylamin, *tert*-Butylamin, n-Pentylamin, n-Hexylamin, n-Heptylamin, n-Octylamin, n-Decylamin, n-Dodecylamin. 2-Ethylhexylamin, Stearylamin, Cetylamin, Laurylamin, Dimethylamin, Diethylamin, Di-n-Propylamin, Di-*iso*-Propylamin, Di-n-Butylamin, Dihexylamin, Dioctylamin, Ethylmethylamin, *Iso*-Propyl-Methylamin, n-Butylmethylamin, *tert*-Butylmethylamin, *Iso*-Propyl-Ethylamin, n-Butylethylamin, *tert*-Butylethylamin, Cyclopentylamin, Cyclohexylamin, Cyclooctylamin, Cyclododecylamin, Morpholin, Piperidin, Pyrrolidin, N-Methylpiperazin, Monoethanolamin, Diethanolamin, Monopropanolamin, Dipropanolamin, Methanthiol, Ethanthiol, *iso-*Propanthiol, n-Propanthiol, n-Butanthiol, *iso*-Butanthiol, *sek-*Butanthiol oder *tert*-Butanthiol.

Als Photoinitiatoren (C) können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen beispielsweise Phosphinoxide, Benzophenone, α-Hydroxy-alkyl-aryl-ketone, Thioxanthone, Anthrachinone, Acetophenone, Benzoine und Benzoinether, Ketale, Imidazole oder Phenylglyoxylsäuren und Gemische davon.

Phosphinoxide sind beispielsweise Mono- oder Bisacylphosphinoxide, wie z.B. Irgacure® 819 (Bis(2,4,6-Trimethylbenzoyl)phenylphosphinoxid), wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO), Ethyl-2,4,6-trimethylbenzoylphonylphosphinat oder Bis(2,6-dimethoxybenzoyl)-2,4,4-trimethylpentylphosphinoxid,

Benzophenone sind beispielsweise Benzophenon, 4-Aminobenzophenon, 4,4'-Bis(dimethylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon,

α-Hydroxy-alkyl-aryl-ketone sind beispielsweise 1-Benzoylcyclohexan-1-ol (1-Hydroxy-cyclohexyl-phenylketon), 2-Hydroxy-2,2-dimethylacetophenon (2-Hydroxy-2-methyl-1-phenyl-propan-1-on), 1-Hydroxyacetophenon, 1-[4-(2-Hydroxyethoxy)-phenyl]-2-hydroxy-2-methyl-1-propan-1-on oder Polymeres, das 2-Hydroxy-2-methyl-1-(4-isopropen-2-yl-phenyl)-propan-1-on einpolymerisiert enthält (Esacure® KIP 150)

Xanthone und Thioxanthone sind beispielsweise 10-Thioxanthenon, Thioxanthen-9-on, xanthen-9-on, 2,4-Dimethylthioxanthon, 2,4-Diethylthioxanthon, 2,4-Di-iso-propylthioxanthon, 2,4-Dichlorthioxanthon oder Chloroxanthenon,

Anthrachinone sind beispielsweise β-methylanthrachinon, *tert-*Butylanthrachinon, Anthrachinoncarbonylsäureester, Benz[de]anthracen-7-on, Benz[a]anthracen-7,12-dion, 2-Methylanthrachinon, 2-Ethylanthrachinon, 2-*tert*-Butylanthrachinon, 1-Chloranthrachinon oder 2-Amylanthrachinon,

Acetophenone sind beispielsweise Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyacetophenon, α-Tetralon, 9-Acetylphenanthren, 2-Acetylphenanthren, 3-Acetylphenanthren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)phenyl]-2-morpholinopropan-1-on, 2,2-Dimethoxy-1,2-diphenylethan-2-on oder 2-Benzyl-2-dimethylamino-1-(4-morpholinophenyl)-butan-1-on,

Benzoine und Benzoinether sind beispielsweise 4-Morpholinodeoxybenzoin, Benzoin, Benzoin-iso-butylether, Benzointetrahydropyranylether, Benzoin-methylether, Benzoin-ethylether. Benzoin-butylether, Benzoin-iso-propylether oder 7-H-Benzoin-methylether oder

Ketale sind beispielsweise Acetophenondimethylketal, 2,2-Diethoxyacetophenon, oder Benzilketale, wie Benzildimethylketal.

Phenylglyoxylsauren sind beispielsweise in DE-A 198 26 712, DE-A 199 13 353 oder WO 98/33761 beschrieben.

Weiterhin verwendbare Photoinitiatoren sind beispielsweise Benzaldehyd, Methylethylketon, 2-Naphthaldehyd, Triphenylphosphin, Tri-o-Tolylphosphin oder 2,3-Butandion.

Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Als weitere lacktypische Additive (D) können beispielsweise Antioxidantien, Stabilisatoren, Aktivatoren (Beschleuniger), Fühlmittel, Pigmente, Farbstoffe, antistatische Agentien, Flammschutzmittel, Verdikker, thixotrope Agentien, oberflächenaktive Agentien, Viskositätsmodifikatoren, Plastifizierer oder Chelatbildner verwendet werden.

Als Beschleuniger für die thermische Nachhärtung kann z.B. Zinnoctoat, Zinkoctoat, Dibutylzinnlaurat oder Diaza[2.2.2]bicyclooctan verwendet werden.

Weiterhin können ein oder mehrere photochemisch und/oder thermisch aktivierbare Initiatoren zugesetzt werden, z.B. Kaliumperoxodisulfat, Dibenzoylperoxid, Cyclohexanonperoxid, Di-tert.-Butylperoxid, Azobis*iso*-butyronitril, Cyclohexylsulfonylacetylperoxid, Di-*iso*propylpercarbonat, *tert*-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

weitere Beispiele geeigneter Initiatoren sind in "Polymer Handbook", 2. Aufl., Wiley & sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Die erfindungsgemäßen Polyurethane (A) werden durch Reaktion der Komponenten a), b) und c) miteinander erhalten.

Dabei ist die molare Zusammensetzung a):b):c) pro 3 mol reaktive Isocycanatgruppen in a) in der Regel wie folgt:
b) 0,1 - 2,9, bevorzugt 0,5 - 2,8, besonders bevorzugt 1,0 - 2,5 und insbesondere 1,5 - 2,5 mol gegenüber Isocyanat reaktive Gruppen sowie
c) 2,9 - 0,1, bevorzugt 0,2 - 2,5, besonders bevorzugt 0,5 - 2,0 und insbesondere 0,5 - 1,5 mol gegenüber Isocyanat reaktive Gruppen.

Das Polyurethan (A) kann nach Umsetzung der Komponenten a), b) und c) noch freie oder gegebenenfalls blockierte Isocyanatgruppen enthalten, bevorzugt sind jedoch mehr als 30 % der vor der Umsetzung in a) vorhandenen Isocyanatgruppen abreagiert, besonders bevorzugt mehr als 50 %, ganz besonders bevorzugt mehr als 60 % und insbesondere mehr als 65%.

Bei Verwendung der Polyurethane in wäßrigen Systemen sind bevorzugt im wesentlichen alle vorhandenen Isocyanatgruppen abreagiert.

In einer bevorzugten Ausführungsform können erfindungsgemäße Polyurethane als weitere Aufbaukomponenten d), e) und/oder f) in folgenen Mengen enthalten (pro mol reaktive Isocyanatgruppe im Polyurethan (A))
d) 1 - 30 mol%, bevorzugt 2 - 20 mol%, besonders bevorzugt 3 - 15 % und insbesondere 5 - 10 mol% an gegenüber Isocyanat reaktiven Gruppen,
e) 0 - 50 mol%, bevorzugt 5 - 40 mol%, besonders bevorzugt 10 - 30 mol% und insbesondere 15 - 25 mol% an gegenüber Isocyanat reaktiven Gruppen und/oder
f) 0 - 50 mol%, bevorzugt 5 - 40 mol%, besonders bevorzugt 10 - 30 mol% und insbesondere 15 - 25 mol% an gegenüber Isocyanat reaktiven Gruppen.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird zunächst die isocyanatgruppenhaltige Verbindung a) vorgelegt, daraufhin b) und anschließend c) zugegeben oder zunächst die isocyanatgruppenhaltige Verbindung a) vorgelegt, daraufhin c) und anschließend b) zugegeben. Nachfolgend können gegebenenfalls gewünschte weitere Komponenten zugegeben werden.

Gemäß einer weiteren Ausführungsform ist es möglich Addukte (A1) aus a) und b), sowie gegebenenfalls d), e) und/oder f) und Addukte (A2) aus a) und c), sowie gegebenenfalls d), e) und/oder f) getrennt voneinander herzustellen und die so erhältlichen Komponenten (A1) und (A2) später, beispielsweise zur Herstellung einer Lackformulierung, miteinander unter Bildung von Addukten (A) zur Reaktion zu bringen.

In der Regel wird die Reaktion bei Temperaturen zwischen 0 und 150 °C, bevorzugt zwischen 20 bis 130 °C und besonders bevorzugt zwischen 25 und 120°C und insbesondere zwischen 40 und 100 °C durchgeführt.

Die Umsetzung wird im allgemeinen in Substanz, Lösung oder Dispersion bevorzugt bei Normaldruck vorgenommen.

Bevorzugt wird dabei unter wasserfreien Bedingungen gearbeitet.

Wasserfrei bedeutet dabei, daß der wassergehalt im Reaktionssystem nicht mehr als 5 Gew% beträgt, bevorzugt nicht mehr als 3 Gew% und besonders bevorzugt nicht mehr als 1 Gew%.

Bevorzugt wird die Reaktion in Gegenwart mindestens eines geeigneten Inertgases durchgeführt, z.B. Stickstoff, Argon, Helium, Kohlenstoffdioxid oder dergleichen.

Die Reaktion kann auch in Gegenwart eines inerten Solvens durchgeführt werden, z.B. Aceton, *Iso*-butyl-methylketon, Ethylmethylketon, Toluol, Xylol, Butylacetat oder Ethoxyethylacetat. Bevorzugt wird die Reaktion jedoch in Abwesenheit eines Solvens durchgeführt.

Die Umsetzung wird üblicherweise beendet, wenn die mit NCO-Gruppen reaktiven Gruppen in der Reaktionsmischung praktisch quantitativ abreagiert sind. Überschüssiges monomeres Isocyanat wird anschließend im Vakuum destillativ entfernt, vorzugsweise bis zu einem Gehalt unter 1 Gew%.

Vorzugsweise beträgt der NCO-Gehalt gemäß DIN 53185 der monomerfreien erfindungsgemäßen Polyurethane (A) von 25 bis 0 Gew%.

Sonstige Reaktionsparameter sind dem Fachmann allgemein bekannt und können beispielsweise so gewählt werden, wie sie in der EP-A-585835, EP-A 496208, EP-A 69866, in den US-Patenten 5 124 427, 5 258 482, 5 290 902 sowie DE-A-4015155 für die Herstellung anderer Biurete, Allophanate und Isocyanurate beschrieben sind.

Üblicherweise wird die Umsetzung der Monomere in Gegenwart eines Katalysators, bevorzugt in Mengen von 10 bis 5000 Gew.ppm, bezogen auf die Menge der eingesetzten Isocyanate, durchgeführt.

Als Katalysatoren kommen die für die Adduktbildung von Isocyanatgruppen allgemein bekannte Katalysatoren in Betracht, also beispielsweise die in der EP-A-649 866 beschriebenen quarternären Ammoniumhydroxide, z.B. N,N,N-Trimethyl-N-(2-hydroxypropyl)ammoniumhydroxid, oder die aus der EP-A-182 203 bekannten quarternären Ammoniumcarboxylate, z.B. N,N,N-Trimethyl-N-(2-hydroxypropyl)ammonium-2-ethylhexanoat, oder als Allophanatbildungskatalysatoren bekannte Zink-organische Verbindungen, z.B. Zink-Acetylacetonat oder Zink-2-Ethylcaproat.

Alternativ werden auch andere metallorganische Verbindungen, d.h. solche mit mindestens einer kovalenten Metall-Kohlenstoff-Bindung, als Katalysatoren eingesetzt, beispielsweise Zirkon- Wismutorganyle.

Die Polyaddition der oben genannten Monomere zur Herstellung der erfindungsgemäßen Polyurethanzubereitung kann besonders bevorzugt in Anwesenheit von Cäsiumsalzen erfolgen, wie in der älteren deutschen Patentanmeldung mit dem Aktenzeichen 10161156.0 vom 12.12.2001 beschrieben. Bevorzugte Cäsiumsalze sind dabei Verbindungen, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₃²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Besonders bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den üblichen Bedingungen zu führen.

Der Reaktionsfortschritt der Polyurethanbildung wird zweckmäßigerweise per Gelpermeationschromatographie (GPC) oder durch Bestimmung des NCO-Gehaltes der Reaktionsmischung verfolgt.

Die Umsetzung wird üblicherweise beendet, wenn die mit Isocyanatgruppen reaktiven Ausgangsverbindungen praktisch vollständig umgesetzt, das heißt per GPC nicht mehr detektierbar sind.

Die Beendigung der Umsetzung erfolgt üblicherweise durch Zusatz von Desaktivatoren. Als Desaktivatoren eignen sich beispielsweise anorganische oder organische Säuren, die entsprechenden Säurehalogenide und Alkylierungsmittel. Beispielhaft genannt seien Phosphorsäure, Monochloressigsäure, Dodecylbenzolsulfonsäure, Benzoylchlorid, Dimethylsulfat und vorzugsweise Dibutylphosphat sowie Di-2-ethylhexylphosphat. Die Desaktivierungsmittel können in Mengen von 1 bis 200 Mol%, vorzugsweise 20 bis 100 Mol%, bezogen auf die Mole an Katalysator, eingesetzt werden.

Polyurethane (A) sind solche mit einem über Gelpermeationschromatographie bestimmbaren Allophanatanteil von 5 bis 65 mol % und insbesondere 10 bis 50 mol% bezogen auf das niedermolekularste Allophanatmolekül.

Ganz besonders bevorzugte Polyurethane (A) enthalten mindestens eine der folgenden Verbindungen der Formel (II), 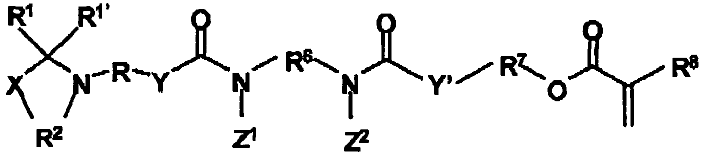 oder höhere Homologen davon,
worin
- R, R¹, R^{1'}, R², X und Y: die oben angeführte Bedeutung aufweisen,
- Y': die gleiche Bedeutung aufweisen kann, wie Y, jedoch davon verschieden sein kann,
- R⁶ und R⁷: jeweils unabhängig voneinander einen divalenten organischen, 2 bis 20 Kohlenstoffatome umfassenden, aliphatischen, cycloaliphatischen oder aromatischen, gegebenenfalls durch funktionelle Gruppen, Aryl, Alkyl, Aryloxy, Alkyloxy, Halogen, Heteroatome und/oder Heterocyclen substituierten organischen Rest,
- R⁸: Wasserstoff, Methyl, Ethyl oder Hydroxymethyl und
- Z¹ und Z²: gleich oder verschieden sein können und unabhängig voneinander Wasserstoff oder -(CO)-NH-R⁶-NCO
bedeuten kann.

R⁶ sind beispielsweise die von den oben genannten Diisocyanaten abgeleiteten divalenten Reste wie 1,4-Butylen, 1,6-Hexylen, 1,8-Octylen, 1,10-Decylen, 1,12-Dodecylen, 1,14-Tetradecylen, Tetramethylxylylen, 2,4,4-Trimethylhex-1,6-ylen, 2,2,4,4-Tetramethylhex-1,6-ylen, 1,4-, 1,3- oder 1,2-Cyclohexylen, Di(cyclohexyl)methan-4,4'-ylen, Di(cyclohexyl)methan-2,4'-ylen, 3,3,5,5-Tetramethylcyclohex-1,5(1')-ylen, 1,4-Dimethylcyclohexan-1(1'),4(1")-ylen, 1,3-Dimethylcyclohexan-1(1'),3(1")-ylen, 1-Methylcyclohex-2,4- oder -2,6-ylen, 2,4- oder 2,6-Toluylen, m- oder p-Xylylen, Diphenylmethan-2,4'-ylen, Diphenylmethan-4,4'-ylen, 1,3- oder 1,4-Phenylen, 1-Chlor-2,4-phenylen, 1,5-Naphthylen, 4,4'-Diphenylen, 3,3'-dimethyldiphen-4,4'-ylen oder 3-Methyldiphenylmethan-4,4'-ylen.

Bevorzugt ist R⁶ 1,6-Hexylen 3,3,5,5-Tetramethylcyclohex-1,5(1')-ylen und besonders bevorzugt 1,6-Hexylen.

R⁷ ist beispielsweise 1,2-Ethylen, 1,2-Propylen, 1,3-Propylen, 2-Methyl-1,3-propylen, 2,2-Dimethyl-1,3-propylen, 2-Ethyl-1,3-propylen, 2-Hydroxy-1,3-propylen, 2-Hydroxymethyl-2-ethyl-1,3-propylen, 2,2-Bis(hydroxymethyl)-1,3-propylen, 1,4-Butylen, 1,6-hexylen oder 2-Ethyl-1,3-hexylen.

Bevorzugt ist R⁷ 1,2-Ethylen, 1,4-Butylen oder 1,6-Hexylen, besonders bevorzugt ist R⁷ 1,2-Ethylen oder 1,4-Butylen und ganz besonders bevorzugt 1,2-Ethylen.
- Y': ist bevorzugt Sauerstoff (-O-).
- R⁸: ist bevorzugt Wasserstoff.
- n: ist bevorzugt 2.

Die erfindungsgemäßen Polyurethane eignen sich besonders als Bindemittel, z.B. in Beschichtungsmassen, Anstrichstoffen oder Lacken.

Die erfindungsgemäßen Polyurethane können bevorzugt als Beschichtungsmassen verwendet werden. Dazu werden sie, falls erforderlich, mit den Komponenten (C) und gegebenenfalls (D) versetzt.

Die Beschichtung der Substrate erfolgt nach üblichen, dem Fachmann bekannten Verfahren, wobei man wenigstens eine erfindungsgemäße Lackformulierung auf das zu beschichtende Substrat in der gewünschten Stärke aufbringt und die flüchtigen Bestandteile, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder coextrudieren erfolgen. Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man das erfindungsgemäße Polyurethan oder die erfindungsgemäßen Lackformulierungen, gegebenenfalls mit weiteren lacktypischen Additiven und thermisch härtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160 °C, thermisch behandelt.

Das Verfahren zum Beschichten von Substraten kann auch so durchgeführt werden, daß nach dem Aufbringen der erfindungsgemäßen Polyurethane oder Lackformulierungen zunächst bei Temperaturen bis zu 160°C, bevorzugt zwischen 60 und 160 °C, thermisch behandelt und anschließend mit Elektronenstrahlen oder UV Belichtung unter Sauerstoff oder bevorzugt unter Inertgas gehärtet wird.

Die Härtung der auf dem Substrat gebildeten Filme kann gewünschtenfalls ausschließlich thermisch erfolgen. Im allgemeinen härtet man die Beschichtungen jedoch sowohl durch Bestrahlung mit energiereicher Strahlung als auch thermisch.

Die Härtung kann auch zusätzlich oder anstelle der thermischen Härtung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Gegebenenfalls kann, wenn mehrere Schichten des Beschichtungsmittels übereinander aufgetragen werden, nach jedem Beschichtungsvorgang eine NIR-, thermische und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der weise, wie sie in der DE-A 199 57 900 beschrieben ist.

Ein weiterer Gegenstand der Erfindung ist ein Verfahren zur Beschichtung von Substraten, wobei man
i) ein Substrat mit einer Lackformulierung, wie zuvor beschrieben, beschichtet,
ii) flüchtige Bestandteile der Lackformulierung zur Filmbildung unter Bedingungen entfernt, bei denen der Initiator (C) im wesentlichen noch keine freien Radikale ausbildet,
iii) gegebenenfalls den in Schritt ii) gebildeten Film mit energiereicher Strahlung bestrahlt, wobei der Film vorgehärtet wird, und anschließend gegebenenfalls den mit dem vorgehärteten Film beschichteten Gegenstand mechanisch bearbeitet oder die Oberfläche des vorgehärteten Films mit einem anderen Substrat in Kontakt bringt,
iv) dem Film thermisch endhärtet

Dabei können die Schritte iv) und iii) auch in umgekehrter Reihenfolge durchgeführt, d. h. der Film kann zuerst thermisch und dann mit energiereicher Strahlung gehärtet werden.

Die erfindungsgemäßen Lackformulierungen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, insbesondere in Form von Folien.

Besonders bevorzugt eignen sich die erfindungsgemäßen Lackformulierungen als oder in Außenbeschichtungen, also solche Anwendungen, die dem Tageslicht ausgesetzt sind, bevorzugt von Gebäuden oder Gebäudeteilen, Innenbeschichtungen, Straßenmarkierungen, Beschichtungen auf Fahrzeugen und Flugzeugen. Insbesondere werden die erfindungsgemäßen Lackformulierungen als oder in Automobilklar- und -decklacke(n) eingesetzt.

Bei der Aushärtung der erfindungsgemäßen Polyurethane können beispielsweise folgende Mechanismen durchlaufen werden:
Mechanismus 1, schnell: Härtung von Doppelbindungen mit Hilfe von energiereicher Strahlung
Mechanismus 2, langsam: Härtung der Isocyanat-Gruppen über Luftfeuchtigkeit
Mechanismus 3, schnell: verkappte Amine reagieren mit Luftfeuchtigkeit, Amin (und ggf. auch Alkohol) wird freigesetzt
Mechanismus 4, sehr schnell: Härtung von NCO-Gruppen mit Amin
Mechanismus 5, schnell: Härtung von NCO-Gruppen mit alkoholischen Hydroxygruppen
Mechanismus 6, schnell: Härtung der Doppelbindung mit Amin (Michael-Addition)

Lediglich die Mechanismen 1 und 2 sind bei konventionellen Dual-Cure-Systemen vorhanden. Bei den erfindungsgemäßen Produkten wird die langsame Reaktion von NCO mit Wasser durch die vorgeschaltete Reaktion des verkappten Amins mit Wasser und die anschließende Reaktion von NCO mit Amin deutlich beschleunigt. Das entstehende Amin eröffnet weiterhin die Möglichkeit der Reaktion mit der Doppelbindung.

Ein weiterer Vorteil ist, daß die Filme durch die gezielte Bildung von Harnstoffen härter werden.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

Die Viskositäten wurden mit einem Rheolab MC 1 System, Z4 DIN, der Fa. Paar Physica bei 23 °C bestimmt.

### Beispiel 2 (Vergleich gemäß WO 00/39183)

Hexamethylendiisocyanat (HDI) wurde unter Stickstoffbedeckung vorgelegt und die in Tabelle 1 genannte Menge an Hydroxyalkyl(meth)acrylat zugesetzt. Man erwärmte die Mischung auf 80°C und gab 200 Gew. ppm (bezogen auf Diisocyanat) des Katalysators N,N,N-Trimethyl-N-(2-hydroxypropyl)-ammonium-2-ethylhexanoat zu. Die Temperatur erhöhte sich langsam auf 120°C. Man ließ bei dieser Temperatur reagieren und stoppte die Reaktion bei dem in Tabelle 1 genannten NCO-Gehalt der Mischung durch Zugabe von 250 Gew. ppm (bezogen auf Diisocyanat) Di-2-(Ethylhexyl)-phosphat. Das Reaktionsgemisch wurde anschließend im Dünnschichtverdampfer bei 135°C und 2,5 mbar von nicht umgesetztem HDI befreit.

Daten zu den Endprodukten stehen in Tabelle 1.

**Tabelle 1**

| Produkt Nr. | Isocyanat | Hydroxyalkyl(meth)ac rylat | Menge bez. ISOcyanat (mol %) | NCO-Gehalt der Mischung (Gew.%) | NCO-Gehalt nach Destillation (Gew.%) | Viskosität bei 23°C (mPas) |
|---|---|---|---|---|---|---|
| 1 | HDI | HEA | 5 | 40,8 | 20,1 | 520 |
| 2 | HDI | HEA | 10 | 39,0 | 18,5 | 310 |
| 3 | HDI | HEA | 15 | 35,6 | 17,4 | 290 |
| 4 | HDI | HEA | 20 | 33,3 | 16,3 | 260 |
| 5* | HDI | HEA | 20 | 32,0 | 15,1 | 1070 |
| 6 | HDI | HEA | 35 | 18,5 | 13,0 | 5530 |
| 7 | HDI | HEA | 50 | 16,8 | 11,8 | 1640 |
| 8 | HDI | HEMA | 30 | 23,2 | 14,2 | 1290 |

| | | | | | | |
|---|---|---|---|---|---|---|
| Abkürzungen: HDI = Hexamethylendiisocyanat HEA = Hydroxyethylacrylat HEMA = Hydroxyethylmethacrylat * längere Reaktionszeit als bei Produkt Nr. 4 | | | | | | |

### Beispiel 3

200g des Produktes 4 aus Beispiel 2 mit einem NCO-Gehalt von 16,3% wurde unter Stickstoffbedeckung vorgelegt, auf 60°C erwärmt und innerhalb 30 min 123g 1-Hydroxyethyl-2-isopropyl-1,3-oxazolidin zugesetzt. Man ließ bei dieser Temperatur 1h reagieren. Das Endprodukt (Produkt Nr.9) wies nach dem Abkühlen eine Viskosität bei 23°C von 720 mPas auf.

### Beispiel 4

In der ersten Reaktionsstufe erfolgt die Darstellung eines HDI/HEA-Adduktes wie in Produkt 5 aus Tabelle 1. In der folgenden Stufe wird dieses mit 1-Hydroxyethyl-2-isopropyl-1,3- oxazolidin nach der folgenden Vorschrift umgesetzt:

556,3 g HDI/HEA-Addukt (Produkt 5 aus Tabelle 1) wurde mit 2 Tropfen Dibutylzinndilaurat (100 %ig) versetzt und auf 60°C erwärmt. Innerhalb von 30 min. wurde dann langsam 1-Hydroxyethyl-2-isopropyl-1,3- oxazolidin (30, 40 oder 50 mol% bezogen auf den analytisch bestimmten NCO-wert gem. DIN 53185 zugegeben. Man ließ für ca. 1 h bei 60°C nachrühren.

Daten zu den Endprodukten stehen in Tabelle 2.

**Tabelle 2**

| Produkt Nr. | HEA/HDI-Addukt ProduktNr. aus Bsp. 2 | Oxazolidin (mol %) bzgl. NCO-Gehalt | NCO-Gehalt (Gew.%) | Viskosität bei 23°C (mPas) |
|---|---|---|---|---|
| 10 | 5 | 30 | 9,0 | 9110 |
| 11 | 5 | 40 | 7,4 | 16800 |
| 12 | 5 | 50 | 5,9 | 23200 |
| 12b | 5 | 100 | 0 | > 30000 |

### Beispiel 5

Hexamethylendiisocyanat (HDI) wurde unter Stickstoffbedeckung vorgelegt und die in Tabelle 3 aufgeführten Mengen an Hydroxyethylacrylat und 1-(2'-Hydroxyethyl)-2-isopropyl-1,3-oxazolidin zugesetzt. Man erwärmte die Mischung auf 80°C und gab 200 Gew. ppm (bezogen auf Diisocyanat) des Katalysators N,N,N-Trimethyl-N-(2-hydroxypropyl)-ammonium-2-ethylhexanoat zu. Man ließ bei dieser Temperatur 30 min reagieren und stoppte die Reaktion durch Zugabe von 250 Gew. ppm (bezogen auf Diisocyanat) Di-2-(Ethylhexyl)-phosphat. Das Reaktionsgemisch wurde anschließend im Dünnschichtverdampfer bei 135°C und 2,5 mbar von nicht umgesetztem HDI befreit.

Daten zu den Endprodukten stehen in Tabelle 3.

**Tabelle 3**

| Produkt Nr. | HEA, Menge bez. Isocyanat (mol %) | Oxazolidin, Menge bez. Isocyanat (mol %) | Viskosität bei 23°C (mPas) |
|---|---|---|---|
| 13 | 10 | 10 | 730 |
| 14 | 15 | 15 | 1150 |

Die Produkte wurden mit Luftfeuchtigkeit oder mit UV-Bestrahlung und anschließender Nachhärtung mit Luftfeuchtigkeit gehärtet. Höherviskose Lackmischungen wurden mit Butylacetat (BuAc) auf 500 mPas verdünnt. Die Lacke wurden mit Filmziehrahmen auf Glas oder Blech aufgezogen.

### Prüfmethoden:

- Pendeldämpfung (PD, in Anzahl Schwingungen): Lack auf Glas als Substrat (DIN 53157) bei einer Lackschichtdicke, trocken von ca. 30 µm im Fall der Lufthärtung und mit ca. 50 µm im Fall der UV-Härtung.
- Erichsentiefung (ET; DIN 53156, in mm Tiefung): Lack auf Bonderblech 132 (Maße 190 × 105 × 1mm von Fa. Chemmetall). Lackschichtdicke 25 bis 30 µm
- Haftung mit Gitterschnitt (HmG; DIN 53151, in Noten): Lack auf Bonderblech 132 (Maße 190 × 105 × 1mm von Fa. Chemmetall). Lackschichtdicke, trocken 25 bis 30 µm

### UV-Bestrahlung:

Die gegebenenfalls bei Raumtemperatur vom Lösemittel abgelüfteten Filme werden 5 mal bei 10m/min Bandgeschwindigkeit unter einem IST-Quecksilberhochdruckstrahler (120 W/cm) bestrahlt.

**Tabelle 5: Härtung ohne UV**

| Produkt | Urethanacrylat Laromer® LR 8987 (BASF AG) | V2, (Vergleich) | 1 aus Tabelle 1 | 2 aus Tabelle 1 | 3 aus Tabelle 1 | 4 aus Tabelle 1 | 8 aus Tabelle 1 |
|---|---|---|---|---|---|---|---|
| Viskosität (mPas) | 4000 | 12300 | 520 | 310 | 290 | 260 | 2920 |
| NCO-Wert (mg KOH / g) | 0 | 12,8 | 20,1 | 18,5 | 17,4 | 16,7 | 15,8 |
| Lackrezept | 50 T Produkt 8 T BuAc 0,5 T DBTL 10 %ig in BuAC | 50 TProdukt 8 T BuAc 0,5 T DBTL 10%ig in BuAC | 50 TProdukt 1,5 T BuAc 0,5 TDBTL 10%ig in BuAC | 50 T Produkt 0,5 T DBTL 10%ig in BuAc | 50 T Produkt 0,5 T DBTL 10%ig in BuAc | 50 T Produkt 0,5 T DBTL 10%ig in BuAc | 50 T Produkt 5,6 TBuAC 0,5 T DBTL 10%ig in BuAc |
| PD nach 24h | nicht härtbar | 32 | 29 | 23 | 24 | 25 | 25 |
| PD nach 2d | | | 105 | 44 | 30 | 29 | 56 |
| PD nach 5d | | | 142 | 54 | 32 | 30 | 61 |
| PD nach 7d | | 30 | 138 | 49 | 32 | 31 | 68 |
| PD nach 14d | | | 138 | 49 | 32 | 31 | |
| ET nach 24h | | | 9 | 9 | 9 | 9 | 6,3 |
| ET nach 7d | | | 8,5 | 9 | 9 | 9 | 6,4 |

| | | | | | | | |
|---|---|---|---|---|---|---|---|
| Abkürzungen: T: Teile DBTL: Dibutylzinndilaurat V2: Roskydal® UA VP LS 2337 der Fa. Bayer, Urethanacrylat aus Basis HDI-Isocyanurat | | | | | | | |

### Ergebnis:

Die Allophanatoacrylate härten ohne Bestrahlung unter Luftfeuchtigkeitseinfluß zu klebfreien Filmen aus. Die Filme sind hochflexibel.

**Tabelle 6: Härtung mit UV**

| Produkt | Urethanacrylat Laromer LR 8987 | V2 (Vergleich) | 1 aus Tabelle 1 | 2 aus Tabelle 1 | 3 aus Tabelle 1 | 4 aus Tabelle 1 |
|---|---|---|---|---|---|---|
| Viskosität (mPas) | 4000 | 12300 | 520 | 310 | 290 | 260 |
| NCO-Wert (mg KOH / g) | 0 | 12,8 | 20,1 | 18,5 | 17,4 | 16,7 |
| Lackrezept | 50 T Produkt 8 T BuAc 2T Irgacure 184 | 50 T Produkt 14,5 T BuAc 2T Irgacure 184 | 50 T Produkt 1,5 T BuAc 2T Irgacure 184 | 50 T Produkt 2T Irgacure 184 | 50 T Produkt 2T Irgacure 184 | 50 T Produkt 2T Irgacure 184 |
| PD nach 24h | 128 | 42 | 46 | 69 | 71 | 63 |
| PD nach 7d | 129 | 139 | 146 | 144 | 144 | 143 |
| ET nach | 3,8 | 8,5 | 9 | 9 | 9 | 9 |
| 24h | | | | | | |
| ET nach 7d | 3,7 | 4,5 | 3,9 | 4 | 4 | 4,4 |
| HmG nach 24h | 5 | 0 | 0 | 0 | 0 | 0 |
| HmG nach 7d | 5 | 1 | 1 | 1,5 | 0,5 | 1 |

| | | | | | | |
|---|---|---|---|---|---|---|
| Irgacure® 184 wurde von der Firma Ciba Spezialitätenchemie bezogen. | | | | | | |

### Ergebnis:

Die niedrigviskosen Isocyanate auf Allophanatbasis zeigen ähnliche Hartungscharakteristiken wie das höherviskose Urethanacrylat V2. Härteverlauf, Flexibilität und Haftung auf Metall sind vergleichbar gut. Nach UV-Bestrahlung sind die Allophanatoacrylate klebfrei ausgehärtet. Unter dem Einfluß von Luftfeuchtigkeit erfolgt ein starker Härteanstieg.

Das Urethanacrylat (Laromer) erhält seine Endeigenschaften bereits unmittelbar nach der Bestrahlung. Die Haftung auf verschiedenen Untergründen ist jedoch erheblich schlechter.

## Patentansprüche

1. Polyurethane (A), enthaltend als Aufbaukomponenten
a) mindestens ein organisches Di- oder Polyisocyanat,
b) mindestens eine Verbindung mit mindestens einer gegenüber Isocyanat reaktiven Gruppe und mindestens einer Acrylat- oder Methacrylatgruppe,
c) mindestens eine Verbindung mit mindestens einer gegenüber Isocyanat reaktiven Gruppe und mindestens einer verkappten Aminogruppe ausgewählt aus der Gruppe bestehend aus offenkettigen oder cyclischen Aminalen, Ketiminen, Aldiminen, N,O-Acetalen, N,O-Ketalen, Carbonsäureamiden, Sulfonsäureamiden und Amidinen und einem Molekulargewicht unter 1000 g/mol, der Formel (I), 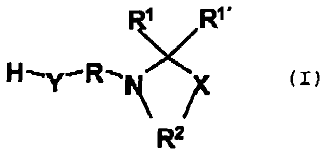 worin
R, R² unabhängig voneinander einen divalenten organischen, 2 bis 20 Kohlenstoffatome umfassenden, aliphatischen, cycloaliphatischen oder aromatischen, gegebenenfalls durch funktionelle Gruppen, Aryl, Alkyl, Aryloxy, Alkyloxy, Halogen, Heteroatome und/oder Heterocyclen substituierten organischen Rest,
R¹, R^{1'} unabhängig voneinander Wasserstoff, C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₀-Alkyl, C₆ - C₁₂-Aryl, C, - C₁₂-Cycloalkyl oder einen fünf- bis sechsgliedrigen, Sauerstoff-, Stickstoff- und/oder Schwefelatome aufweisenden Heterocyclus, wobei die genannten Reste jeweils durch funktionelle Gruppen, Aryl, Alkyl, Aryloxy, Alkyloxy, Halogen, Heteroatome und/oder Heterocyclen substituiert sein können,
X Sauerstoff (-O-), un- oder monosubstituierter Stickstoff (-N(R⁴)-) oder >N-NR⁴R⁵,
Y Sauerstoff (-O-), unsubstituierter Stickstoff (-N(H)-) oder Schwefel (-S-) und
R⁴, R⁵ unabhängig voneinander Wasserstoff oder C₁-C₄-Alkyl
bedeuten.
d) gegebenenfalls mindestens eine Verbindung mit mindestens einer gegenüber Isocyanat reaktiven Gruppe und mindestens einer dispergieraktiven Gruppe
e) gegebenenfalls mindestens eine Verbindung mit mindestens zwei gegenüber Isocyanat reaktiven Gruppen sowie
f) gegebenenfalls von a) bis d) verschiedene Verbindungen mit mindestens einer gegenüber Isocyanat reaktiven Gruppe, wobei der Allophanatanteil 5 bis 65 mol% bezogen auf das niedermolekularste Allophanatmolekül beträgt.

2. Polyurethane (A) nach Anspruch 1, bei denen die Aufbaukomponente c) ein Molekulargewicht unter 750 g/mol aufweist.

3. Polyurethane nach einem der vorstehenden Ansprüche, enthaltend mindestens 0,01 mol/100 g Verbindung (Meth)acrylatgruppen und/oder mindestens 0,01 mol/100g Verbindung verkappte Aminogruppen.

4. Polyurethane gemäß einem der vorstehenden Ansprüche, enthaltend mindestens eine der folgenden Verbindungen der Formel (II). 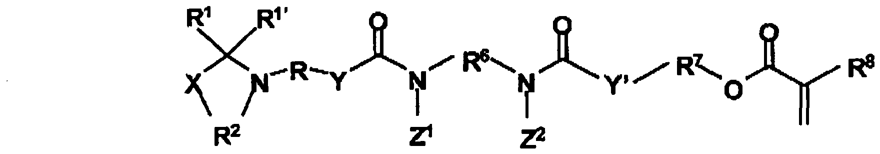 oder höhere Homologen davon,
worin
R, R¹, R^{1'}, R², X und Y die in Anspruch 7 angeführte Bedeutung aufweisen,
Y' die gleiche Bedeutung aufweisen kann, wie Y, jedoch davon verschieden sein kann,
R⁶ und R⁷ jeweils unabhängig voneinander einen divalenten organischen, 2 bis 20 Kohlenstoffatome umfassenden, aliphatischen, cycloaliphatischen oder aromatischen, gegebenenfalls durch funktionelle Gruppen, Aryl, Alkyl, Aryloxy, Alkyloxy, Halogen, Heteroatome und/oder Heterocyclen substituierten organischen Rest,
R⁸ Wasserstoff, Methyl, Ethyl oder Hydroxymethyl und
Z¹ und Z² gleich oder verschieden sein können und unabhängig voneinander Wasserstoff oder -(CO)-NH-R⁶-NCO
bedeuten.

5. Beschichtungsmasse, enthaltend
mindestens ein Polyurethan (A) gemäß einem der Ansprüche 1 bis 4 sowie
(C) gegebenenfalls einen oder mehrere photochemisch und/oder thermisch aktivierbare(n) Initiator(en), sowie
(D) gegebenenfalls weitere lacktypische Additive.

6. Verfahren zum Beschichten von Substraten, **dadurch gekennzeichnet, daß** das mit einem Material gemäß einem der vorstehende Ansprüche beschichtete Substrat strahlungsgehärtet und bei Temperaturen bis zu 160°C thermisch behandelt wird.

7. Verfahren nach Anspruch 6, **dadurch gekennzeichnet, daß** die thermische Behandlung zwischen 60 und 160°C erfolgt.

8. Verfahren nach einem der Ansprüche 6 oder 7, **dadurch gekennzeichnet, daß** die Strahlungshärtung unter Inertgas durchgeführt wird.

9. Verwendung eines Polyurethans gemäß einem der Ansprüche 1 bis 4 in strahlungshärtbaren Beschichtungsmassen.

10. Verwendung eines Materials gemäß einem der Ansprüche 1 bis 5 zur Beschichtung von Holz, Metallen oder Kunststoffen.

11. Verwendung eines Materials gemäß einem der Ansprüche 1 bis 5 in Automobillacken und Autcmobildecklacken.

## Claims

1. A polyurethane (A) comprising as synthesis components
a) at least one organic diisocyanate or polyisocyanate,
b) at least one compound containing at least one isocyanate-reactive group and at least one acrylate or methacrylate group,
c) at least one compound containing at least one isocyanate-reactive group and at least one capped amino group selected from the group consisting of open-chain aminals, cyclic aminals, ketimines, aldimines, N,O-acetales, N,O-ketales, carboxamides, sulfonamides, and amidines and having a molecular weight below 1000 g/mol, of the formula (I) 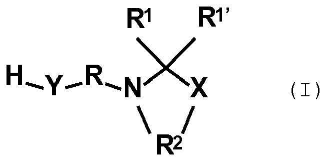 where
R and R² independently are each a divalent organic aliphatic, cycloaliphatic or aromatic radical containing 2 to 20 carbon atoms which is unsubstituted or substituted by functional groups, aryl, alkyl, aryloxy, alkyloxy, halogen, heteroatoms and/or heterocycles,
R¹ and R^{1'} independently are each hydrogen, C₁-C₁₈ alkyl, C₂-C₁₀ alkyl which is uninterrupted or interrupted by one or more oxygen and/or sulfur atoms and/or by one or more substituted or unsubstituted amino groups, or is C₆-C₁₂ aryl, C₅-C₁₂ cycloalkyl or a five- or six-membered heterocycle containing oxygen, nitrogen and/or sulfur atoms, it being possible for each of said radicals to be substituted by functional groups, aryl, alkyl, aryloxy, alkyloxy, halogen, heteroatoms and/or heterocycles,
X is oxygen (-0-), unsubstituted or monosubstituted nitrogen (-N(R⁴)-) or >N-NR⁴R⁵,
Y is oxygen (-0-), unsubstituted nitrogen (-N(H)-) or sulfur (-S-), and
R⁴ and R⁵ independently are each hydrogen or C₁-C₄ alkyl
d) optionally at least one compound containing at least one isocyanate-reactive group and at least one actively dispersing group,
e) optionally at least one compound containing at least two isocyanate-reactive groups, and
f) optionally compounds other than a) to d), containing at least one isocyanate-reactive group, the allophanate fraction amounting to from 5 to 65 mol% based on the allophanate molecule with the lowest molecular mass.

2. A polyurethane (A) according to claim 1, wherein component c) has a molecular weight below 750 g/mol.

3. A polyurethane according to either of the preceding claims, comprising per 100 g of compound at least 0.01 mol of (meth)acrylate groups and/or at least 0.01 mol of capped amino groups.

4. A polyurethane according to any of the preceding claims, comprising at least one of the following compounds of the formula (II), 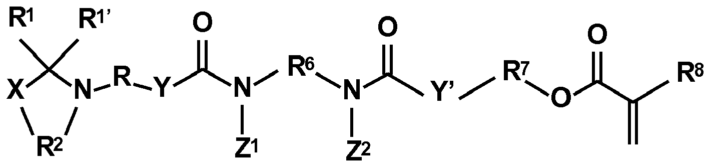 or higher homologs thereof
where
R, R¹, R^{1'}, R², X, and Y are as defined in claim 1,
Y' can be as defined for Y but can also be different,
R⁶ and R⁷ each independently are a divalent organic aliphatic, cycloaliphatic or aromatic radical containing 2 to 20 carbon atoms and unsubstituted or substituted by functional groups, aryl, alkyl, aryloxy, alkyloxy, halogen, heteroatoms and/or heterocycles,
R⁸ is hydrogen, methyl, ethyl or hydroxymethyl, and
Z¹ and Z² can be identical or different and independently of one another are hydrogen or -(CO)-NH-R⁶-NCO.

5. A coating composition comprising
at least one polyurethane (A) according to any of claims 1 to 4,
(C) optionally one or more photochemically and/or thermally activable initiators, and
(D) optionally further typical coatings additives.

6. A method of coating a substrate, which comprises radiation curing a substrate coated with a material according to any of the preceding claims and subjecting it to thermal treatment at temperatures up to 160°C.

7. The method according to claim 6, wherein thermal treatment takes place between 60 and 160°C.

8. The method according to either of claims 6 and 7, wherein radiation curing is conducted under inert gas.

9. The use of a polyurethane according to any of claims 1 to 4 in a radiation curable coating composition.

10. The use of a material according to any of claims 1 to 5 to coat wood, metal or plastic.

11. The use of a material according to any of claims 1 to 5 in an automotive paint or automotive topcoat material.

## Revendications

1. Polyuréthanes (A), contenant en tant que composants constitutifs :
a) au moins un di- ou polyisocyanate organique,
b) au moins un composé contenant au moins un groupe réactif avec les isocyanates et au moins un groupe acrylate ou méthacrylate,
c) au moins un composé contenant au moins un groupe réactif avec les isocyanates et au moins un groupe amino protégé choisi dans le groupe constitué par les aminals à chaîne ouverte ou cycliques, les cétimines, les aldimines, les N,O-acétals, les N,O-cétals, les amides d'acides carboxyliques, les amides d'acides sulfoniques et les amidines, et d'un poids moléculaire inférieur à 1 000 g/mol, de formule (I) 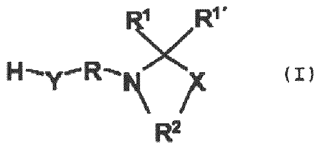 dans laquelle
R, R² signifient indépendamment l'un de l'autre un radical organique bivalent, comprenant 2 à 20 atomes de carbone, aliphatique, cycloaliphatique ou aromatique, éventuellement substitué par des groupes fonctionnels, aryle, alkyle, aryloxy, alkyloxy, halogène, des hétéroatomes et/ou des hétérocycles,
R¹, R^{1'} signifient indépendamment l'un de l'autre hydrogène, alkyle en C₁-C₁₈, alkyle en C₂-C₁₀ éventuellement interrompu par un ou plusieurs atomes d'oxygène et/ou de soufre et/ou un ou plusieurs groupes imino substitués ou non substitués, aryle en C₆-C₁₂, cycloalkyle en C₅-C₁₂, ou hétérocycle de cinq à six éléments, comprenant des atomes d'oxygène, d'azote et/ou de soufre, les radicaux cités pouvant à chaque fois être substitués par des groupes fonctionnels, aryle, alkyle, aryloxy, alkyloxy, halogène, des hétéroatomes et/ou des hétérocycles,
X signifie oxygène (-0-), azote non substitué ou monosubstitué (-N(R⁴)-) ou >N-NR⁴R⁵,
Y signifie oxygène (-0-), azote non substitué (-N(H)-) ou soufre (-S-) et
R⁴, R⁵ signifient indépendamment l'un de l'autre hydrogène ou alkyle en C₁-C₄,
d) éventuellement au moins un composé contenant au moins un groupe réactif avec les isocyanates et au moins un groupe à action dispersante,
e) éventuellement au moins un composé contenant au moins deux groupes réactifs avec les isocyanates, et
f) éventuellement des composés différents de a) à d) contenant au moins un groupe réactif avec les isocyanates, la proportion d'allophanate étant de 5 à 65 % en moles par rapport à la molécule d'allophanate de poids moléculaire le plus faible.

2. Polyuréthanes (A) selon la revendication 1, dans lesquels le composant constitutif c) présente un poids moléculaire inférieur à 750 g/mol.

3. Polyuréthanes selon l'une quelconque des revendications précédentes, contenant au moins 0,01 mol/100 g de composé de groupes (méth)acrylate et/ou au moins 0,01 mol/100 g de composé de groupes amino protégés.

4. Polyuréthanes selon l'une quelconque des revendications précédentes, contenant au moins un des composés de formule (II) suivants : 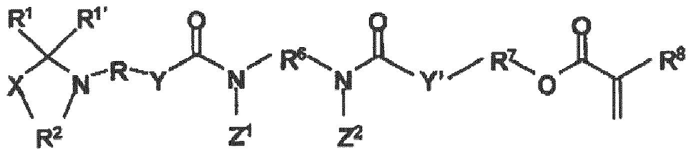 ou leurs homologues supérieurs,
dans laquelle
R, R¹, R^{1'}, R², X et Y présentent la signification indiquée dans la revendication 1,
Y' peut présenter la même signification qu'Y, mais peut toutefois en être différent,
R⁶ et R⁷ signifient à chaque fois indépendamment l'un de l'autre un radical organique bivalent, comprenant 2 à 20 atomes de carbone, aliphatique, cycloaliphatique ou aromatique, éventuellement substitué par des groupes fonctionnels, aryle, alkyle, aryloxy, alkyloxy, halogène, des hétéroatomes et/ou des hétérocycles,
R⁸ signifie hydrogène, méthyle, éthyle ou hydroxyméthyle, et
Z¹ et Z² peuvent être identiques ou différents, et signifient indépendamment l'un de l'autre hydrogène ou -(CO)-NH-R⁶-NCO.

5. Matière de revêtement, contenant :
au moins un polyuréthane (A) selon l'une quelconque des revendications 1 à 4, et
(C) éventuellement un ou plusieurs initiateurs activables photochimiquement et/ou thermiquement, et
(D) éventuellement des additifs types des vernis supplémentaires.

6. Procédé de revêtement de substrats, **caractérisé en ce que** le substrat revêtu avec un matériau selon l'une quelconque des revendications précédentes est durci par rayonnements et traité thermiquement à des températures de jusqu'à 160 °C.

7. Procédé selon la revendication 6, **caractérisé en ce que** le traitement thermique a lieu entre 60 et 160 °C.

8. Procédé selon l'une quelconque des revendications 6 ou 7, **caractérisé en ce que** le durcissement par rayonnements est réalisé sous un gaz inerte.

9. Utilisation d'un polyuréthane selon l'une quelconque des revendications 1 à 4 dans des matières de revêtement durcissables par rayonnements.

10. Utilisation d'un matériau selon l'une quelconque des revendications 1 à 5 pour le revêtement de bois, de métaux ou de plastiques.

11. Utilisation d'un matériau selon l'une quelconque des revendications 1 à 5 dans des vernis automobiles et des vernis automobiles de finition.
